# EUROPEAN PATENT APPLICATION

(11) **EP 4 644 810 A1**
(43) Date of publication of application: **05.11.2025**
(21) Application number: 23910816.0
(22) Date of filing: 28.12.2023
(51) Int. Cl.: F25D 29/00, F25D 25/02, G05B 19/042, F25D 23/02

(54) **REFRIGERATOR DRAWER OPENING AND CLOSING METHOD, AND MEDIUM AND REFRIGERATOR**

(30) Priority: 29.12.2022 CN 202211706873
(71) Applicant: QINGDAO HAIER REFRIGERATOR CO., LTD., Qingdao, Shandong 266101 (CN); HAIER SMART HOME CO., LTD., Qingdao, Shandong 266101 (CN)
(72) Inventor: MA, Jian, Qingdao, Shandong 266101 (CN); LAN, Chuanfeng, Qingdao, Shandong 266101 (CN); ZHU, Xiaobing, Qingdao, Shandong 266101 (CN); MIAO, Jianlin, Qingdao, Shandong 266101 (CN); LI, Chunyang, Qingdao, Shandong 266101 (CN)
(74) Representative: Winter, Brandl - Partnerschaft mbB
(86) International application number: PCT/CN2023/142674
(87) International publication number: WO 2024/140899

(57) **Abstract**

The present application provides a refrigerator drawer opening and closing method, medium and refrigerator. The refrigerator drawer opening and closing method comprises: obtaining a pulse signal from a pulse module, wherein when the drawer moves, the pulse module is triggered to generate the pulse signal, and the drawer movement comprises an opening movement and a closing movement; obtaining a pulse count of the pulse signal; when the pulse count reaches a preset value, obtaining a movement direction of the drawer according to the pulse signal; activating a drive module to drive the drawer to continue moving in a current movement direction. The beneficial effect is: accurate driving of refrigerator drawer opening and closing can be achieved.

## Description

### TECHNICAL FIELD

The present application relates to the field of household appliances, particularly to a refrigerator drawer opening and closing method, medium and refrigerator.

### BACKGROUND

Refrigerators can be used for users' daily storage of items. Since the refrigerator compartment is used frequently, the refrigerator compartment is generally located in the upper part of the refrigerator while the freezer compartment is located in the lower part. The freezer compartment can be designed as a pullout drawer, comprising a drawer for storing items, a sliding rail set between the drawer and the freezer compartment, and a drawer door set at the front end of the drawer. Users can pull the drawer door to pull out the drawer from the freezer compartment and store items, and when the items are placed, users can push the drawer door to push the drawer back into the freezer compartment. However, this design has the following defects: since the freezer drawer together with the items inside is relatively heavy, it is laborious to push and pull for certain groups of people such as the elderly and children, making it inconvenient to use.

### SUMMARY

The object of the present application is to provide a refrigerator drawer opening and closing method, medium and refrigerator, which can achieve accurate driving of refrigerator drawer opening and closing, by obtaining pulse signals from a pulse module and obtaining the movement direction of the drawer according to the pulse signals when the pulse count reaches a preset value.

To achieve the above object, an embodiment of the present application provides a refrigerator drawer opening and closing method, comprising:
obtaining a pulse signal from a pulse module, wherein when the drawer moves, the pulse module is triggered to generate the pulse signal, and the drawer movement comprises an opening movement and a closing movement;
obtaining a pulse count of the pulse signal;
when the pulse count reaches a preset value, obtaining a movement direction of the drawer according to the pulse signal;
activating a drive module to drive the drawer to continue moving in a current movement direction.

To achieve the above object, an embodiment of the present application provides a computer-readable storage medium storing a computer program thereon, wherein when executed by a processor, the computer program implements steps of the refrigerator drawer opening and closing method in any of the above embodiments.

To achieve the above object, an embodiment of the present application provides a refrigerator comprising a memory and a processor, wherein the memory stores a computer program executable on the processor, and when the processor executes the computer program, steps of the refrigerator drawer opening and closing method in any of the above embodiments are implemented.

Compared with the prior art, the present application obtains pulse signals from a pulse module, and obtains the movement direction of the drawer according to the pulse signals when the pulse count reaches a preset value. The present application has the beneficial effect of achieving accurate driving of refrigerator drawer opening and closing.

### BRIEF DESCRIPTION OF DRAWINGS

Fig. 1 is a structural diagram of a refrigerator according to an embodiment of the present application;
Fig. 2 is a structural diagram of the drive module and sliding rail between the drawer and the storage compartment sidewall shown in Fig. 1;
Fig. 3 is a structural diagram of the pulse module of the refrigerator shown in Fig. 1;
Fig. 4 is a diagram showing pulse signals generated by the pulse module shown in Fig. 3 when the drawer performs an opening movement;
Fig. 5 is a diagram showing pulse signals generated by the pulse module shown in Fig. 3 when the drawer performs a closing movement;
Fig. 6 is a flow chart of a refrigerator drawer opening and closing method according to an embodiment of the present application.

### DETAILED DESCRIPTION OF THE PRESENT INVENTION

The following detailed description of the present application will be made with reference to the specific embodiments shown in the drawings. However, these embodiments do not limit the present application, and any structural, methodological, or functional variations made by those skilled in the art based on these embodiments are comprised in the scope of protection of the present application.

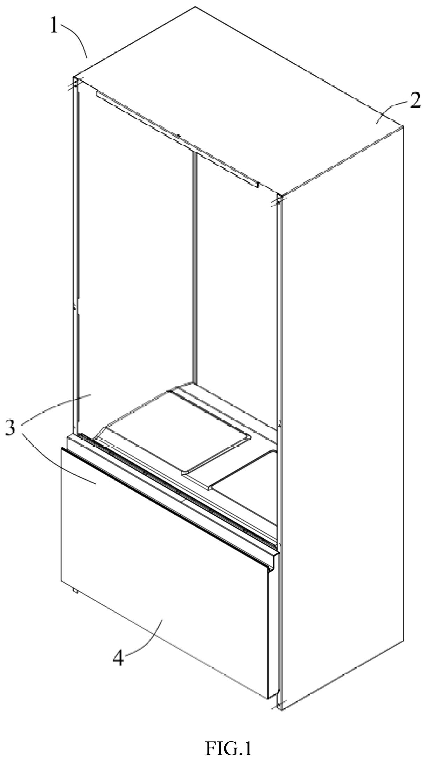

Referring to Fig. 1, in a specific embodiment of the present application, a refrigerator 1 is provided. The refrigerator 1 comprises a cabinet 2. The cabinet 2 is provided with several storage compartments 3 for storing items. The storage compartments 3 may comprise a refrigerator compartment, a freezer compartment, a variable temperature compartment, etc. In this embodiment, up and down direction refer to the height direction of the refrigerator 1, front and back direction refer to the depth direction of the refrigerator 1, and the storage compartment 3 opening faces the front.

The refrigerator 1 comprise a pullout drawer 4 provided in the storage compartment 3. Preferably, in this embodiment, the drawer 4 may be provided in the freezer compartment. A handle may be set at the front end of the drawer 4 for pulling the drawer 4. Of course, in other embodiments, the drawer 4 may also be set in the refrigerator compartment, variable temperature compartment, etc.

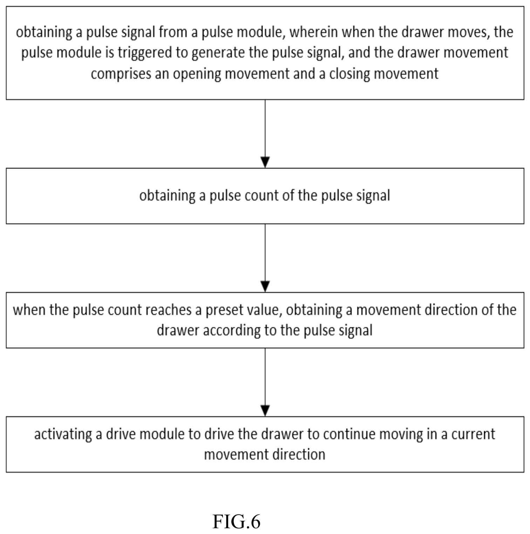

Referring to Figs. 1 to 6, further, in this embodiment, providing a refrigerator 1 drawer 4 opening and closing method, comprises:
obtaining a pulse signal from a pulse module 5, wherein when the drawer 4 moves, the pulse module 5 is triggered to generate pulse signal, and the movement of drawer 4 comprise opening movement and closing movement;
obtaining a pulse count of the pulse signal;
when the pulse count reaches a preset value, obtaining a movement direction of the drawer 4 according to the pulse signal;
activating a drive module 6 to drive the drawer 4 to continue moving in a current movement direction.

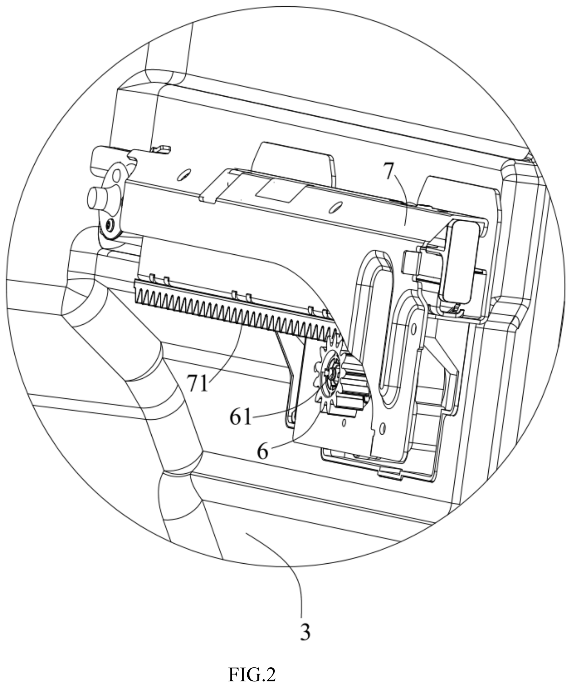

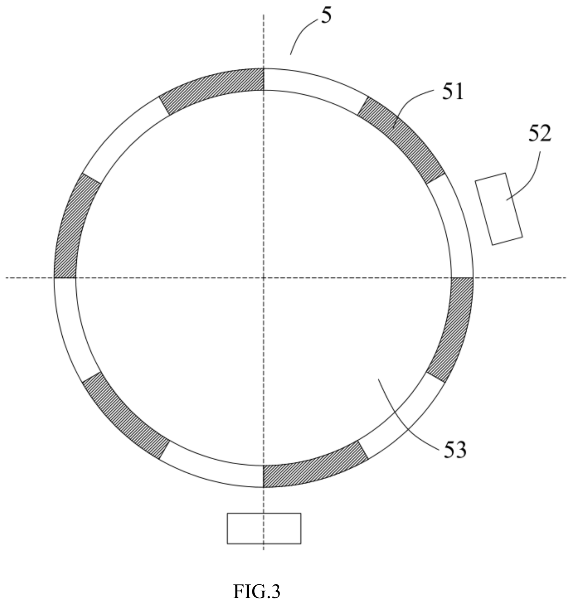

Referring to Figs. 2 and 3, further, in this embodiment, the drive module 6 comprise a gear 61 transmission-connected with the drawer 4 and a motor transmission-connected with the gear 61. When the motor is activated, the motor may drive the gear 61 to drive the drawer 4 to move. When the motor is not activated, the drawer 4 may move under external force while driving the gear 61 to rotate. The pulse module 5 may be provided at the gear 61, and the rotation of the gear 61 triggers the pulse module 5 to generate the pulse signal.

In this embodiment, a sliding rail 7 may be arranged between the drawer 4 and a sidewall of the storage compartment 3. The sliding rail 7 may comprise a fixed rail and a movable rail. The fixed rail is fixed to the sidewall of the storage compartment 3, the movable rail is fixed to a sidewall or a bottom wall of the drawer 4.

The motor and gear 61 may be fixedly installed on the fixed rail of the storage compartment 3. The movable rail may be fixedly provided with a rack 71. The gear 61 mesh with the rack 71. When the motor drives the gear 61 to rotate, the gear 61 drives the rack 71 on the movable rail to move, and the drawer 4 moves accordingly. When the user pulls the drawer 4, the rack 71 follows the drawer 4 movement, and the gear 61 rotates accordingly.

The motor may be a motor capable of forward rotation, reverse rotation and speed adjustment, so as to achieve the opening movement and closing movement of the drawer 4, and achieve drawer 4 movement speed control.

The pulse module 5 may comprise cooperatively arranged magnets 51 and Hall sensors 52.

Preferably, a first driven wheel may be arranged on the gear shaft of gear 61. A second driven wheel 53 may be arranged meshing with one side of the first driven wheel. Several magnets 51 may be provided and evenly distributed on the rim of the second driven wheel 53. The Hall sensor 52 may be fixedly arranged around the second driven wheel 53. When the gear 61 rotates, the magnets 51 on the second driven wheel 53 rotate together with the gear 61. When the magnets 51 pass the Hall sensor 52, the Hall sensor 52 is triggered to generate pulse signals.

Of course, in other embodiments of the present application, the magnets 51 may also be arranged on the rim of the gear 61, or arranged on the gear shaft of the gear 61, or arranged on the drawer sidewall 4, as long as it can achieve that when the drawer 4 moves, the pulse module 5 can be triggered to generate periodic pulse signals.

Of course, in other embodiments of the present application, the pulse module 5 may also be a structure using similar functions to the magnets 51 and Hall sensor 52. For example, the magnets 51 may be replaced with alternately arranged light-blocking plates and light-passing plates, and the Hall sensor 52 may be replaced with a photoelectric sensor.

Referring to Figs. 2 and 3, further, in this embodiment, a clutch may be arranged between the motor and the gear 61, and the method may further comprise:
when obtaining a signal to activate the motor, controlling the clutch to make the motor transmission-connected with the gear 61;
when detecting that the drawer 4 stops moving, controlling the clutch to disconnect the transmission between the motor and the gear 61.

In practical use, when the drawer 4 stops moving, controlling the clutch to disconnect the transmission between the motor and gear 61, avoiding the transmission connection between the gear 61 and motor hindering the user from pushing and pulling the drawer 4, allowing the user to pull or push the drawer 4 with less force.

When the user pulls the stopped drawer 4 outward, the drawer 4 drives the gear 61 to rotate, the magnets 51 rotate accordingly and trigger the Hall sensor 52 to generate pulse signals.

When the pulse signals reach a certain count, it can indicate that the user wants to open or close the drawer 4, rather than accidentally touching the drawer 4 causing it to move, so the motor can be activated, and the clutch can be controlled to make the motor transmission-connected with the gear 61, so that the motor drives the gear 61 to drive the drawer 4 to continue moving in the direction of the user's push or pull.

With such arrangement, it can achieve a combination of manual pushing/pulling of drawer 4 and electric driving of drawer 4 opening and closing, allowing users to trigger the automatic opening and closing function of drawer 4 by pulling or pushing the drawer 4. There is no requirement to provide additional trigger structures, which can accurately control of drive module 6 driving drawer 4 opening and closing, and prevent the drive module 6 from being mistakenly started due to accidental touches by users, and facilitate user operation.

Referring to Figs. 3 to 5, further, in this embodiment of the refrigerator 1 drawer 4 opening and closing method, the pulse signal may comprise a first pulse signal 81 and a second pulse signal 82, wherein the first pulse signal 81 and the second pulse signal 82 have the same frequency and a phase difference of 90 degrees;
when the drawer 4 performs the opening movement, the phase of the first pulse signal 81 lags 90 degrees behind the phase of the second pulse signal 82;
when the drawer 4 performs the closing movement, the phase of the first pulse signal 81 leads 90 degrees ahead of the phase of the second pulse signal 82.

In this embodiment, the pulse module 5 may comprise two Hall sensors 52 cooperating with the magnets 51. The two Hall sensors 52 may be arranged at different positions. When the magnets 51 follow the rotation of the gear 61, the magnets 51 trigger the two Hall sensors 52 to generate first pulse signal 81 and second pulse signal 82, first pulse signal 81 and second pulse signal 82have different phases and the same frequency. Through the first pulse signal 81 and second pulse signal 82, accurate detection of the drawer 4's movement direction, movement distance, movement speed, etc. can be achieved.

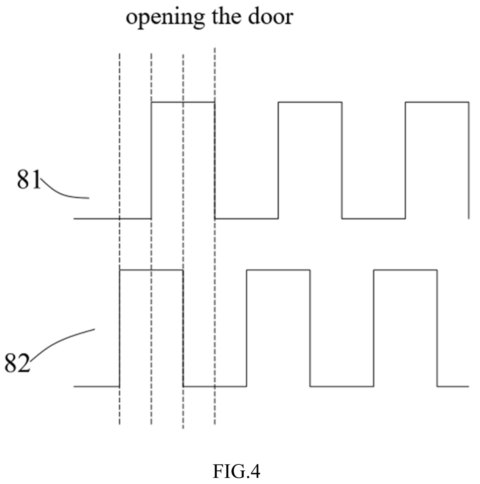

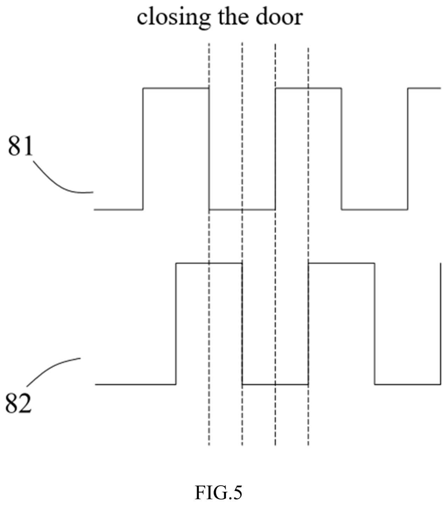

Referring to Figs. 4 and 5, further, in this embodiment, the method of "obtaining a movement direction of the drawer 4 according to the pulse signal" comprise:
obtaining a first phase point, at the first phase point, the first pulse signal 81 changes from high electrical level to low electrical level or from low electrical level to high electrical level; or obtaining a second phase point, at the second phase point, the second pulse signal 82 changes from high electrical level to low electrical level or from low electrical level to high electrical level;
determining whether the first pulse signal 81 and the second pulse signal 82 are at the same electrical level within a 90-degree phase range before the first phase point, or determining whether the first pulse signal 81 and the second pulse signal 82 are at the same electrical level within a 90-degree phase range before the second phase point;
when the first pulse signal 81 and the second pulse signal 82 are at different electrical levels within the 90-degree phase range before the first phase point, or the first pulse signal 81 and the second pulse signal 82 are at the same electrical level within the 90-degree phase range before the second phase point, the drawer 4 performs the opening movement;
when the first pulse signal 81 and the second pulse signal 82 are at the same electrical level within the 90-degree phase range before the first phase point, or the first pulse signal 81 and the second pulse signal 82 are at different electrical levels within the 90-degree phase range before the second phase point, the drawer 4 performs the closing movement.

With such arrangement, accurate detection of the movement direction of the drawer 4 can be achieved by comparing the first pulse signal 81 and second pulse signal 82.

Referring to Figs. 4 and 5, further, in this embodiment, the method may pre-obtain a pulse count of the pulse signals generated by triggering the pulse module 5 when the drawer 4 performs the opening movement or the closing movement for a preset distance. Obtaining a movement distance of the drawer 4 corresponding to one pulse according to a ratio of the preset distance to the pulse count, and store the movement distance.

With such arrangement, accurate understanding of the correspondence between pulse count in pulse signals and drawer 4 movement distance can be achieved.

Referring to Figs. 4 and 5, further, in this embodiment, the method of "obtaining a movement distance of the drawer 4 according to the pulse signal" may comprise:
obtaining a pulse count of the pulse signal;
calculating the movement distance of the drawer 4 according to the pulse count of the pulse signal and the pre-stored movement distance of the drawer 4 corresponding to one pulse signal.

With such arrangement, accurate detection of the movement distance of drawer 4 can be achieved according to the pulse signal.

Referring to Figs. 4 and 5, further, in this embodiment, the method of "obtaining a movement speed of drawer 4 according to the pulse signal" may comprise:
obtaining a movement distance of the drawer 4 according to the pulse signal;
obtaining a movement time of the drawer 4 according to the pulse signal;
obtaining the movement speed of the drawer 4 according to a ratio of the movement distance of the drawer 4 to the movement time of the drawer 4.

With such arrangement, accurate detection of the movement speed of drawer 4 can be achieved according to the pulse signal.

Further, in this embodiment, before "activating the drive module 6 to drive the drawer 4 to continue moving in a current movement direction", the method may further comprise:
obtaining a movement speed of drawer 4 according to the pulse signal;
determining whether the movement speed is within a preset range;
whenthe movement speed is within a preset range, activating the drive module 6;
when the movement speed is not within a preset range, not activating the drive module 6.

In practical use, when the drawer 4 moves slowly, the user may have accidentally touched the drawer 4, so there is no need to activate the motor to drive drawer 4, to avoid incorrect drawer opening/closing due to mistouch. Therefore, when detecting that the movement speed of drawer 4 is below the preset range, the drive module 6 may not be activated.

When the drawer 4 moves too fast, i.e., when the user pulls the drawer 4 at a relatively high speed, even if the drive module 6 is activated, it may not achieve good driving effect, and may even hinder the movement of drawer 4 or cause damage to the drawer 4 and drive module, and may also cause user injury. Therefore, when detecting that the movement speed of drawer 4 is above the preset range, the drive module 6 may not be activated.

Further, in this embodiment, the preset range may comprise a first preset range and a second preset range, and the method may further comprise:
when obtaining that the drawer 4 performs the opening movement according to the pulse signal, determining whether the movement speed of the drawer 4 is within the first preset range;
when obtaining that the drawer 4 performs the closing movement according to the pulse signal, determining whether the movement speed of the drawer 4 is within the second preset range, wherein the first preset range and the second preset range have the same upper limit value, and a lower limit value of the first preset range is less than that of the second preset range.

In this embodiment, different preset ranges can be set for opening and closing movement speeds of drawer 4, making the minimum speed requirement lower when users pull the drawer 4 outward to trigger the drive module 6, and higher when users push the drawer 4 inward to trigger the drive module 6. Avoiding automatic closing of drawer 4 due to accidental touch when users are accessing items, improving the accuracy of automatic drawer opening/closing function activation.

Further, in this embodiment, before "activating the drive module 6 to drive the drawer 4 to continue moving in a current movement direction", the method may further comprise:
obtaining a movement distance of the drawer 4 according to the pulse signal;
determining whether the movement distance of the drawer 4 reaches a preset value;
when the movement distance of the drawer 4 reaches a preset value, activating the drive module 6;
when the movement distance of the drawer 4 not reaches a preset value, not activating the drive module 6.

With such arrangement, accurate driving of drawer opening and closing can be achieved, avoiding incorrect drawer opening/closing due to user mistouch, improving the accuracy of automatic drawer opening/closing function activation.

Further, in this embodiment, the preset value may comprise a first preset value and a second preset value, and the method may further comprise:
when obtaining that the drawer 4 performs the opening movement according to the pulse signal, determining whether the movement distance of the drawer 4 reaches the first preset value;
when obtaining that the drawer 4 performs the closing movement according to the pulse signal, determining whether the movement distance of the drawer 4 reaches the second preset value, wherein the first preset value is less than the second preset value.

In this embodiment, different preset values can be set for opening and closing movement distances of drawer 4, making the minimum distance requirement lower when users pull the drawer 4 outward to trigger the drive module 6, and higher when users push the drawer 4 inward to trigger the drive module 6, avoiding automatic closing of drawer 4 due to accidental touch when users are accessing items, improving the accuracy of automatic drawer opening/closing function activation.

Referring to Figs. 4 and 5, further, in this embodiment, the refrigerator 1 drawer 4 opening and closing method may further comprise:
starting a counter to count while obtaining the pulse signal;
when obtaining that the drawer 4 performs the opening movement according to the pulse signal, increasing the counter value by 1 for each additional pulse;
when obtaining that the drawer 4 performs the closing movement according to the pulse signal, decreasing the counter value by 1 for each additional pulse;
when detecting that the drawer 4 is completely closed, clearing the counter to zero;
obtaining position information of the drawer 4 relative to a completely closed state according to the counter value and the pre-stored movement distance of the drawer 4 corresponding to one pulse.

With such arrangement, accurate detection of the position information of the drawer 4 can be achieved according to the pulse signal, thereby knowing the opening size of drawer 4 and enabling control of drawer 4 to stop at specific positions. Of course, in other embodiments of the present application, a single pulse signal may also be used to obtain position information of drawer 4.

Further, in this embodiment, a computer-readable storage medium is provided, storing a computer program thereon, wherein when executed by a processor, the computer program implements steps of the refrigerator 1 drawer 4 opening and closing method in any of the above embodiments.

Further, in this embodiment, the refrigerator 1 may comprise a memory and a processor, wherein the memory stores a computer program executable on the processor, and when the processor executes the computer program, steps of the opening and closing method for the drawer 4 in the refrigerator 1 in any of the above embodiments are implemented.

In conclusion, the method for opening and closing the drawer in the refrigerator 1, the medium and the refrigerator 1 of the present application, by obtaining pulse signals from pulse module 5 and obtaining the movement direction of drawer 4 according to the pulse signals when the pulse count reaches a preset value, can solve the problem in prior art where the freezer drawer 4 together with items inside is relatively heavy, making it laborious for certain groups like the elderly and children to push and pull, and inconvenient to use.

By adopting the technical solution of this application, a combination of manual pushing/pulling of drawer 4 and electric driving of drawer 4 opening and closing can be achieved, allowing users to trigger the automatic opening and closing function of drawer 4 by pulling or pushing the drawer 4. Without requiring additional trigger structures, enabling accurate control of drive module 6 driving drawer 4 opening and closing, avoiding incorrect activation of drive module 6 due to user mistouch, and facilitating user operation.

It should be understood that although this specification describes according to embodiments, not every embodiment contains only one independent technical solution. This narrative method in the specification is only for clarity. Those skilled in the art should take the specification as a whole, and the technical solutions in various embodiments can also be appropriately combined to form other embodiments that can be understood by those skilled in the art.

The series of detailed descriptions listed above are only specific descriptions of feasible embodiments of the present application, and they are not used to limit the scope of protection of the present application. All equivalent implementations or modifications that do not depart from the technical spirit of the present application should be comprised in the scope of protection of the present application.

## Claims

1. A refrigerator drawer opening and closing method, charactered in that, comprising:
obtaining a pulse signal from a pulse module, wherein when the drawer moves, the pulse module is triggered to generate the pulse signal, and the drawer movement comprises an opening movement and a closing movement;
obtaining a pulse count of the pulse signal;
when the pulse count reaches a preset value, obtaining a movement direction of the drawer according to the pulse signal;
activating a drive module to drive the drawer to continue moving in a current movement direction.

2. The refrigerator drawer opening and closing method according to claim 1, wherein before "activating a drive module to drive the drawer to continue moving in a current movement direction", the method further comprises:
obtaining a movement speed of the drawer according to the pulse signal;
determining whether the movement speed is within a preset range;
when the movement speed is within a preset range, activating the drive module;
when the movement speed is not within a preset range, not activating the drive module.

3. The refrigerator drawer opening and closing method according to claim 2, wherein the preset range comprises a first preset range and a second preset range, and the method further comprises:
when obtaining that the drawer performs the opening movement according to the pulse signal, determining whether the movement speed of the drawer is within the first preset range;
when obtaining that the drawer performs the closing movement according to the pulse signal, determining whether the movement speed of the drawer is within the second preset range, wherein the first preset range and the second preset range have the same upper limit value, and a lower limit value of the first preset range is less than that of the second preset range.

4. The refrigerator drawer opening and closing method according to claim 1, wherein before "activating a drive module to drive the drawer to continue moving in a current movement direction", the method further comprises:
obtaining a movement distance of the drawer according to the pulse signal;
determining whether the movement distance of the drawer reaches a preset value;
when the movement distance of the drawer reaches a preset value, activating the drive module;
when the movement distance of the drawer not reaches a preset value, not activating the drive module.

5. The refrigerator drawer opening and closing method according to claim 1, wherein the preset value comprises a first preset value and a second preset value, and the method further comprises:
when obtaining that the drawer performs the opening movement according to the pulse signal, determining whether the movement distance of the drawer reaches the first preset value;
when obtaining that the drawer performs the closing movement according to the pulse signal, determining whether the movement distance of the drawer reaches the second preset value, wherein the first preset value is less than the second preset value.

6. The refrigerator drawer opening and closing method according to claim 1,
wherein
the pulse signal comprises a first pulse signal and a second pulse signal, the first pulse signal and the second pulse signal have the same frequency and a phase difference of 90 degrees;
when the drawer performs the opening movement, the phase of the first pulse signal lags 90 degrees behind the phase of the second pulse signal;
when the drawer performs the closing movement, the phase of the first pulse signal leads 90 degrees ahead of the phase of the second pulse signal.

7. The refrigerator drawer opening and closing method according to claim 6, wherein the method of "obtaining a movement direction of the drawer according to the pulse signal" comprises:
obtaining a first phase point, at the first phase point, the first pulse signal changes from high electrical level to low electrical level or from low electrical level to high electrical level, or obtaining a second phase point , at the second phase point , the second pulse signal changes from high electrical level to low electrical level or from low electrical level to high electrical level;
determining whether the first pulse signal and the second pulse signal are at the same electrical level within a 90-degree phase range before the first phase point, or determining whether the first pulse signal and the second pulse signal are at the same electrical level within a 90-degree phase range before the second phase point;
when the first pulse signal and the second pulse signal are at different electrical levels within the 90-degree phase range before the first phase point, or the first pulse signal and the second pulse signal are at the same electrical level within the 90-degree phase range before the second phase point, then the drawer performs the opening movement;
when the first pulse signal and the second pulse signal are at the same electrical level within the 90-degree phase range before the first phase point, or the first pulse signal and the second pulse signal are at different electrical levels within the 90-degree phase range before the second phase point, then the drawer performs the closing movement.

8. The refrigerator drawer opening and closing method according to claim 1, wherein the method comprises pre-obtaining a pulse count of the pulse signal generated by triggering the pulse module when the drawer performs the opening movement or the closing movement for a preset distance; obtaining a movement distance of the drawer corresponding to one pulse according to a ratio of the preset distance to the pulse count, and storing the movement distance.

9. The refrigerator drawer opening and closing method according to claim 8, wherein the method of "obtaining a movement distance of the drawer according to the pulse signal" comprises:
obtaining a pulse count of the pulse signal;
calculating the movement distance of the drawer according to the pulse count of the pulse signal and the pre-stored movement distance of the drawer corresponding to one pulse signal.

10. The refrigerator drawer opening and closing method according to claim 2, wherein the method of "obtaining a movement speed of the drawer according to the pulse signal" comprises:
obtaining a movement distance of the drawer according to the pulse signal;
obtaining a movement time of the drawer according to the pulse signal;
obtaining the movement speed of the drawer according to a ratio of the movement distance of the drawer to the movement time of the drawer.

11. The refrigerator drawer opening and closing method according to claim 8, further comprising:
starting a counter to count while obtaining the pulse signal;
when obtaining that the drawer performs the opening movement according to the pulse signal, increasing the counter value by 1 for each additional pulse;
when obtaining that the drawer performs the closing movement according to the pulse signal, decreasing the counter value by 1 for each additional pulse;
when detecting that the drawer is completely closed, clearing the counter to zero;
obtaining position information of the drawer relative to a completely closed state according to the counter value and the pre-stored movement distance of the drawer corresponding to one pulse.

12. The refrigerator drawer opening and closing method according to claim 1, wherein the drive module comprises a gear transmission-connected with the drawer and a motor transmission-connected with the gear, when the motor is activated, the motor drives the gear to drive the drawer to move, when the motor is not activated, the drawer moves under external force while driving the gear to rotate, the pulse module is arranged at the gear, the rotation of the gear triggers the pulse module to generate the pulse signal, a clutch is arranged between the motor and the gear, and the method further comprises:
when obtaining a signal to activate the motor, controlling the clutch to make the motor transmission-connected with the gear;
when detecting that the drawer stops moving, controlling the clutch to disconnect the transmission between the motor and the gear.

13. A computer-readable storage medium storing a computer program thereon, wherein when executed by a processor, the computer program implements steps of the refrigerator drawer opening and closing method according to claim 1.

14. A refrigerator comprising a memory and a processor, wherein the memory stores a computer program executable on the processor, and when the processor executes the computer program, steps of the refrigerator drawer opening and closing method according to claim 1 are implemented.
